# EUROPÄISCHE PATENTSCHRIFT

(11) **EP 2 459 339 B1**
(45) Veröffentlichungstag und Bekanntmachung des Hinweises auf die Patenterteilung: **18.09.2013**
(21) Anmeldenummer: 10721108.8
(22) Anmeldetag: 23.04.2010
(51) Int. Cl.: B23D 77/04

(54) **EINSTELLELEMENT**
REGULATING ELEMENT
ELÉMENT DE RÉGLAGE

(30) Priorität: 28.07.2009 DE 102009035071
(43) Veröffentlichungstag der Anmeldung: 06.06.2012
(73) Patentinhaber: KENNAMETAL INC., Latrobe, PA 15650-0231 (US)
(72) Erfinder: HACKER, Michael, 90482 Nürnberg (DE); MANNER, Heinrich, 92543 Guteneck (DE); SPICHTINGER, Xaver, 92526 Oberviechtach (DE)
(74) Vertreter: FDST Patentanwälte
(86) Internationale Anmeldenummer: PCT/EP2010/002498
(87) Internationale Veröffentlichungsnummer: WO 2011/012179

(56) Entgegenhaltungen:
- EP-A1- 1 454 694
- WO-A1-2007/088353
- WO-A1-2010/079473
- DE-C1- 10 060 283
- US-A- 4 125 342

## Beschreibung

Die Erfindung betrifft ein Einstellelemen gemäß dem Oberbegriff des Anspruchs 1 für einen in einem Werkzeugsitz eines Zerspanungswerkzeugs gespannten Schneidkörper und ein Zerspanungswerkzeug mit einem von einem Einstellelement fein eingestellten Schneidkörper.

### Hintergrund der Erfindung

Aus der WO 2007/088353 A1 ist ein Werkzeugspannsystem bekannt, welches einen als Schneidplatte ausgestalteten Schneidkörper, eine die Schneidplatte im Werkzeugsitz spannende Spannschraube und ein Einstellelement gemäß dem Oberbegriff des Anspruchs 1 zur Feineinstellung der Schneidplatte aufweist. Das Einstellelement ist hierbei als längsverschieblicher Einstellkeil ausgestaltet. Der Einstellkeil besitzt eine zum Grundkörper schräg verlaufende Wirkfläche, welche die der aktiven Schneidkante der Schneidplatte abgewandte Schneidkörperrückwand der Schneidplatte mit Druck beaufschlagt. Der Grundkörper des Einstellelements ist zylinderförmig ausgestaltet. Die zylinderförmige Ausgestaltung des Grundkörpers hat den Vorteil, dass sich der Grundkörper des Einstellelements in der ebenfalls zylinderförmigen Einstellelementführung selbsttätig so ausrichtet, dass die Wirkfläche des Einstellelements stets bündig an der ihr zugeordneten Rückseite der Schneidplatte, der Schneidkörperrückwand, anliegt. Das Einstellelement ist zur Realisierung seiner Stellbewegung in seiner Führung längsverschieblich gelagert. Zum Antrieb des Einstellelements in seiner Führung ist am Ende der Führung eine Madenschraube eingeschraubt, die mit dem Ende ihres Schafts das der Wirkfläche des Einstellelements abgewandte Freiende des Einstellelements beaufschlagt. Durch ein Hineinschrauben der Madenschraube in die Führung wird das Einstellelement in Längsrichtung der Führung auf die Schneidkörperrückwand zu bewegt. Durch ein Herausschrauben der Madenschraube wird der Druck auf die Rückwand der Schneidplatte verringert, so dass das Einstellelement in der Führung von der Schneidplatte weg bewegt wird.

Nachteilig bei dieser Ausführungsform ist die Tatsache, dass das in der Realität sehr kleine Einstellelement beim Werkzeugwechsel sich in seiner Führung ungewollt verdrehen kann. Übersteigt diese ungewollte Verdrehung ein bestimmtes Maß, funktioniert auch der vorerwähnte Effekt der Selbstausrichtung des Einstellelements nicht mehr. Vielmehr trifft dann das Einstellelement mit Bereichen seines Wirkendes auf die Schneidkörperrückwand der neu gespannten Schneidplatte auf, die zum Feineinstellen der Schneidplatte völlig ungeeignet sind. Im schlimmsten Fall werden der Grundkörper des Einstellelements und/oder die Wendeschneidplatte sogar beschädigt. Zur vollständigen Funktionstüchtigkeit des Einstellelements ist es aber erforderlich, dass die Wirkfläche bündig, nämlich plan an der als Anlagefläche wirksamen Schneidkörperrückwand anliegt. Liegt das Einstellelement hingegen nur punktuell oder einseitig am Schneideinsatz an, führt dies zu unerwünschten Spannungen im Werkzeug bzw. zu Ungenauigkeiten bei der Einstellung.

Aus der EP 1 454 694 A1 ist eine Verstellvorrichtung mit Verliersicherung für einen Schneideinsatz zu entnehmen, bei dem ein Einstellelement in einer Ausnehmung geführt ist, die zur Verdrehsicherung einen Polygonquerschnitt aufweist.

Aus der DE 100 60 283 C1 sowie der US 4,125,342 sind weitere Ausführungsvarianten für Einstellelemente zur Feinjustierung von Schneideinsätzen zu entnehmen.

Aus der nachveröffentlichten WO 2010/079473 A1 ist ein weiterer Einstellmechanismus zu entnehmen, bei dem eine Madenschraube entlang einer quer und schräg zu einer Verstellrichtung geneigneten Schraubenachse in ein Einstellelement eindrehbar ist, so dass aufgrund der schräg geneigten Schraubenachse die gewünschte Verstellung des Einstellelements in dessen Längsrichtung erzielt ist.

### Aufgabe der Erfindung

Ausgehend von diesen Nachteilen liegt der Erfindung die Aufgabe zugrunde, ein Einstellelement so zu gestalten, dass es sich einerseits weiterhin selbsttätig ausrichtet und sich andererseits jedoch nicht mehr ungewollt in seiner Führung verdrehen kann.

### Lösung der Aufgabe

Zur Vermeidung der ungewollten Verdrehbarkeit sollte im Zuge einer ersten Vorüberlegung daran gedacht werden, den Grundkörper des Einstellelements prismatisch, insbesondere quadratisch auszugestalten. Die Gefahr des ungewollten Verdrehens wäre dann wirksam beseitigt. Allerdings birgt eine prismatische Querschnittsform den Nachteil, dass die Anlageflächen nur linienförmig oder gar nur punktförmig an den jeweiligen Gegenflächen im Grundkörper einerseits und an der Schneidkörperrückwand andererseits anliegen, weil die jeweiligen Winkel nicht unendlich genau gefertigt werden können. Auf diese Weise wäre die mit der Erfindung erwünschte selbsttätige Ausrichtung des Einstellelements in seiner Führung zur ebenen, insbesondere planen Anlage der Wirkfläche an der zugehörigen Rückwand des Schneidkörpers nicht mehr gewährleistet. Die Lösung der Aufgabe besteht deshalb darin, die zylinderförmige Außenkontur des Einstellelements im Wesentlichen zu erhalten und nur einen kleinen Bereich der Außenkontur des Einstellelements so zu verändern, dass die ungewollte Verdrehbarkeit beseitigt ist. Der zylinderförmige Grundkörper des Einstellelements weist eine kreisförmige, also rotationssymmetrische Querschnittsform auf. Als Verdrehsicherung dient eine nur über einen geringen Winkelbereich des kreisförmigen Querschnitts an- oder eingeformte Asymmetrie am Grundkörperquerschnitt. Diese von der Zylinderform des Grundkörpers abweichende Kontur kann sowohl als Einformung als auch als Anformung am Grundkörper ausgestaltet sein. Durch die erfindungsmäßige Modifikation des Grundkörpers bei gleichzeitiger Beibehaltung der zylindrischen Grundform ist so die ungewollte Verdrehbarkeit des Einstellelements beseitigt bei weiterer Aufrechterhaltung der selbsttätigen Ausrichtung des Einstellelements in seiner Führung. Das verdrehgesicherte Einstellelement ist noch in einem kleinen Winkelbereich drehbar. Das Einstellelement kann sich sowohl gegenüber der als Anlagefläche wirksamen Schneidkörperrückwand als auch gegenüber den Innenwänden der Führung im Grundkörper selbsttätig ausrichten.

Zur Lösung der Aufgabe wird also ein Einstellelement für einen Schneidkörper gemäß dem Anspruch 1 vorgeschlagen. Der Schneidkörper liegt im Werkzeugsitz eines Zerspanungswerkzeugs bereits vorgespannt ein. Das Einstellelement hat einen im Wesentlichen zylinderförmigen Grundkörper und an seiner Stirnseite eine den Schneidkörper im montierten Zustand beaufschlagende Wirkfläche. In bzw. an den Zylindermantel des Grundkörpers ist zur Abweichung von der Zylinderform des Grundkörpers eine Kontur als Verdrehsicherung für das Einstellelement eingeformt bzw. angeformt.

Die auf den Anspruch 1 rückbezogenen Ansprüche beinhalten teilweise vorteilhafte und teilweise für sich selbst erfinderische Weiterbildungen dieser Grunderfindung. In vorteilhafter Ausgestaltung ist vorgeschlagen, die Kontur in den Zylindermantel des Grundkörpers des Einstellelements einzuformen. Die einfachste Art der Einformung ist eine in den Zylindermantel eingeformte Abflachung.

Eine weitere bevorzugte Ausführungsform ist die im Anspruch 4 beanspruchte Nut-Feder-Kombination zur Bildung der Kontur. Hierbei ist eine halbkreisförmige Nut in den Zylindermantel eingeformt. In diese Nut ist ein zylindrischer Stift nach Art einer Feder einlegbar. Der aus der Nut herausragende Bereich des Stiftmantels dient hierbei als Kontur. In weiterer Ausgestaltung ist vorgeschlagen, den Stift in der Nut unverlierbar zu fixieren. Beispielsweise ist es denkbar, den Stift einfach in der Nut zu verlöten oder zu verkleben oder als Übermaßanpassung einzupressen.

In alternativer Ausgestaltung ist es vorgeschlagen, die Kontur nicht in den Zylindermantel einzuformen, sondern die Kontur an den Zylindermantel anzuformen. Der Zylindermantel bleibt dadurch vollständig erhalten. In bevorzugter Ausgestaltung dient eine an den Zylindermantel angeformte und sich über die gesamte Länge des Zylindermantels erstreckende Leiste als Kontur. In einer weiteren, alternativ vorgeschlagenen Ausführungsform ist die Kontur als Nase ausgebildet, die sich nur über einen Teilbereich des zylindrischen Außenmantels des Einstellelements erstreckt. Vorteilhaft ist diese Nase im Bereich des der Wirkfläche abgewandten Freiendes des Einstellelements angeordnet. Auf diese Weise muss die Führung für das Einstellelement nur im Bereich des Einführendes des Einstellelements ausgeformt, insbesondere ausgefräst werden, um einen Aufnahmeraum für die Nase zu schaffen. Auf diese Weise ist es möglich, auch bereits vorhandene Werkzeuge mit bereits vorhandenen Führungen zur Aufnahme des Einstellelements, wie sie beispielsweise aus dem oben zitierten Stand der Technik bekannt sind, mit der Erfindung nachzurüsten.

Fertigungstechnisch vorteilhaft und deshalb für sich selbst erfinderisch ist die Weiterbildung der Erfindung mit einem teilzylindrischen Körper, welcher am zylinderförmigen Grundkörper angeformt ist. Auf diese Weise erhält das Einstellelement die Umrissgestalt zweier einander überlappender Teilkreise, also im Wesentlichen die Querschnittsform der arabischen Ziffer 8. Nach der Erfindung ist der eine, den eigentlichen Grundkörper des Einstellelements bildende Teilkreis deutlich größer als der andere, die Kontur bildende Teilkreis. Fertigungstechnisch hat diese Variante den Vorteil, dass zunächst mit einem ersten kleinen Bohrer die Aufnahmebohrung für die Kontur gebohrt werden kann und anschließend in derselben Aufspannung mit einem großen Bohrer die eigentliche Führung für das Einstellelement. Der Vollständigkeit halber sei angemerkt, dass sich dieser fertigungstechnische erfinderische Vorteil auch mit der oben bereits beschriebenen Nut-Feder-Kombination als Kontur realisieren lässt.

Eine weitere vorteilhafte Ausgestaltung betrifft die Anordnung der Kontur am Einstellelement im Bezug auf dessen Wirkfläche. Die Wirkfläche ist zur Schaffung eines Einstellkeils bezogen auf die Mittellängsachse des Einstellelements abgeschrägt. Die abgeschrägte Wirkfläche liegt plan an der Rückwand des Schneidkörpers an. Die Kraftübertragung lässt sich über die Madenschraube gut in Mittellängsrichtung des Einstellelements realisieren. Besonders vorteilhaft bei der zylinderförmigen Ausgestaltung des Grundkörpers ist es, wenn gerade derjenige Bereich des Zylindermantels, welchen die Normalen der Wirkfläche schneiden, besonders bündig an der Innenwand der Führung des Einstellelements anliegen. Diese vollflächige Anlage hat den Vorteil, dass sich das Einstellelement gegenüber dem Schneidkörper in seiner Führung besonders gut selbst ausrichtet. Es ist deshalb in vorteilhafter Ausgestaltung der Erfindung vorgesehen, die Kontur in einem Bereich des Zylindermantels anzuordnen, welcher nicht deckungsgleich mit dem Schnittpunkt der Normalen der Wirkfläche ist. Als besonders vorteilhaft wird es angesehen, die Kontur bezogen auf den Querschnitt des Grundkörpers in einem Winkel von 90° zum Schnittbereich der normalen Wirkfläche mit dem Zylindermantel anzuordnen. In dieser Anordnung geht die Wirkfläche auch von der Stirnseite des Grundkörpers in die Stirnseite der Kontur fließend über.

### Beschreibung der Figuren

- Fig.1: zeigt die Seitenansicht eines rotierenden Zerspanungswerkzeugs mit einem Werkzeugsitz mit einem darin gespannten Schneidkörper und mit einem erfindungsmäßigen Einstellelement;
- Fig. 2: den Schnitt II-II aus Fig. 1;

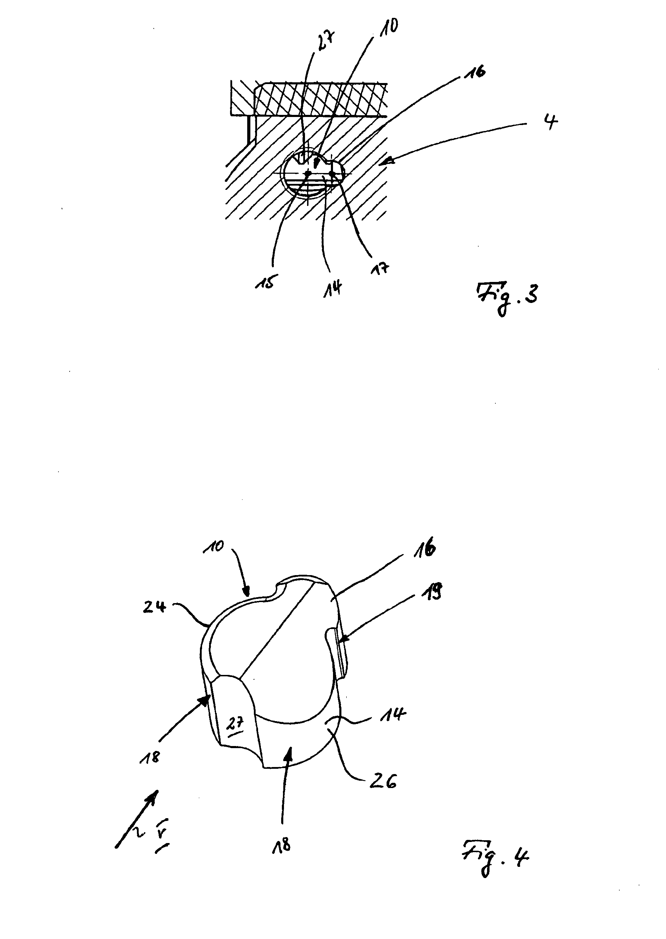

- Fig. 3: den Schnitt III-III aus Fig. 2;
- Fig. 4: die perspektivische Ansicht einer Ausführungsform des erfindungsmäßigen Einstellelements;
- Fig. 5: die Seitenansicht des in Fig. 4 dargestellten Einstellelements gemäß Pfeil V in Fig. 4;
- Fig. 6: eine Draufsicht auf die Stirnseite des Einstellelements mit der Wirkfläche des in Fig. 4 und Fig. 5 dargestellten Einstellelements und

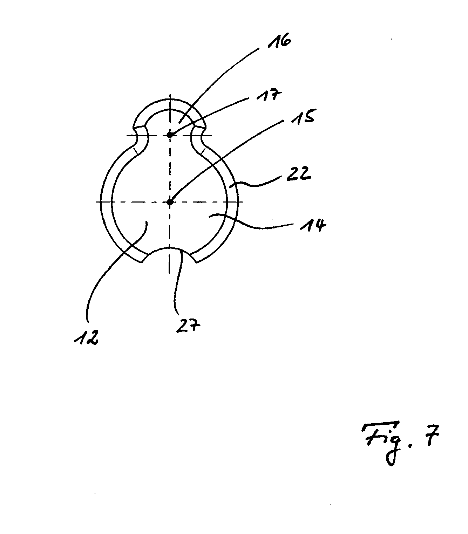

- Fig. 7: eine entsprechende Unteransicht auf das der Wirkfläche abgewandte Freiende des Einstellelements.

### Beschreibung des Ausführungsbeispiels

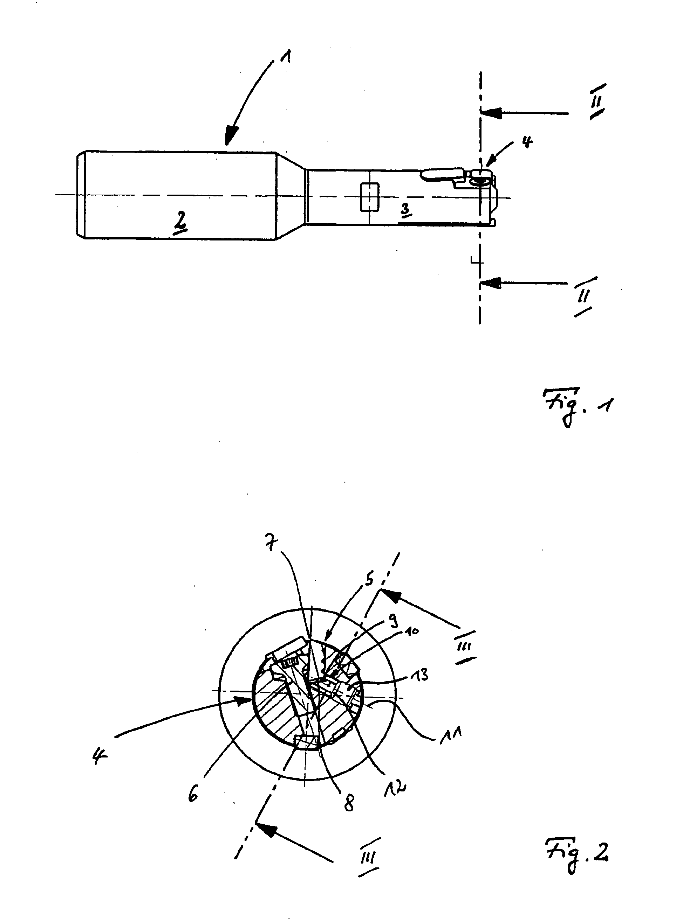

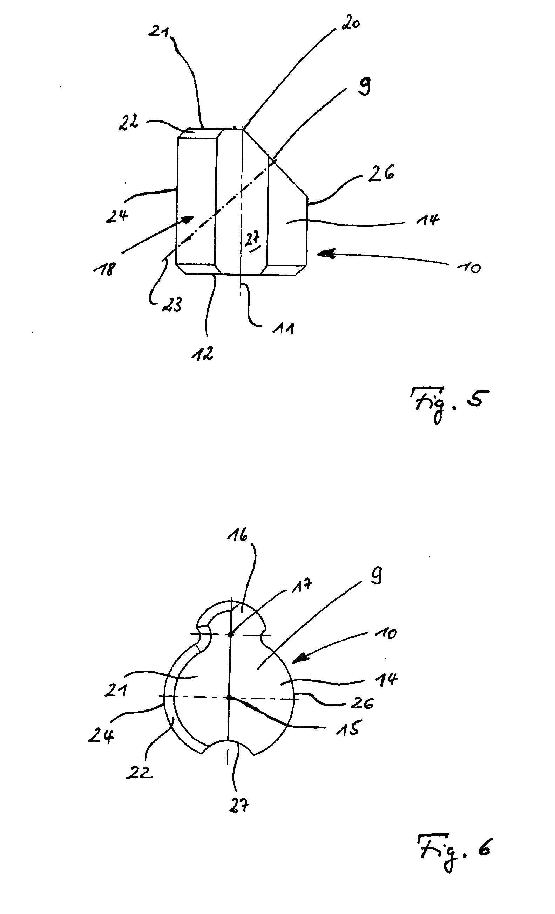

Das in Fig. 1 in seiner Seitenansicht dargestellte rotierende Zerspanungswerkzeug 1 weist einen Spannbereich 2 zum Einspannen des Zerspanungswerkzeugs 1 in das Spannfutter einer Werkzeugmaschine und einen Werkzeugaufnahmebereich 3 auf, an dessen Ende der Werkzeugsitz 4 ausgebildet ist. Die Einzelheiten des Werkzeugsitzes 4 sind anhand der Fig. 2 weiter beschrieben. Prinzipiell ist es auch möglich, den aus dem Stand der Technik WO 2007/088353 A1 - Fig. 5 bekannten Aufbau des Werkzeugsitzes zu verwenden.

Im Werkzeugsitz 4 ist der als Schneidplatte ausgestaltete Schneidkörper 5 mittels einer Spannschraube 6 gespannt. Der Schneidkörper 5 weist eine aus dem Werkzeugsitz 4 hinaus ragende Schneidkante 7 und eine Schneidkörperrückwand 8 auf. An der Schneidkörperrückwand 8 liegt beim Ausführungsbeispiel die Wirkfläche 9 des als Einstellkeil ausgebildeten Einstellelements 10 plan und bündig an. Das Einstellelement 10 wird von seinem der Wirkfläche 9 in Richtung der Mittellängsachse 11 des Einstellelements 10 abgewandten Freiende 12 her von einer Madenschraube 13 beaufschlagt. Mit Hilfe der Madenschraube 13 ist das Einstellelement 10 in Richtung seiner Mittellängsachse 11 in seiner Führung im Werkzeugsitz 4 längsverschieblich gelagert. Die Madenschraube 13 dient so als Drehantrieb für das Einstellelement 10.

Das Einstellelement 10 weist einen zylinderförmigen Grundkörper 14 auf. Der Grundkörper 14 hat eine kreisrunde Querschnittsform und ist somit zum Kreismittelpunkt 15 punktsymmetrisch, insbesondere rotationssymmetrisch. Durch den Kreismittelpunkt 15 verläuft als Normale die Mittellängsachse 11. Im Ausführungsbeispiel ist am Grundkörper 14 die Kontur 16 angeformt. Die Kontur 16 ist ihrerseits zylinderförmig ausgestaltet. Da die Kontur 16 an den Grundkörper 14 angeformt ist, ist sie kein vollständiger Zylinder, sondern nur ein gleichsam an den Grundzylinder des Grundkörpers 14 angedockter Teilzylinder. Mit anderen Worten weist die Kontur 16 die Querschnittsform eines Teilkreises auf. Dieser Teilkreis ist zum Teilkreismittelpunkt 17 wiederum rotationssymmetrisch. Da sich der zum Kreismittelpunkt 15 rotationssymmetrische Vollkreis des Grundkörpers 14 und der um den Teilkreismittelpunkt 17 rotationssymmetrische Teilkreis der Kontur 16 überlappen, weist das im Ausführungsbeispiel dargestellte Einstellelement mehr oder weniger die Querschnittsform einer arabischen Acht auf. Das Einstellelement 10 gleitet sowohl mit der Zylindermantelfläche 18 seines Grundkörpers 14 als auch mit der Teilzylindermantelfläche 19 an der Innenwand seiner Führung im Werkzeugsitz 4 in Richtung der Mittellängsachse 11 des Einstellelements 10 entlang.

Im Bereich der Stirnseite 20 ist die gegenüber dem zylindrischen Grundkörper 14 abgeschrägte Wirkfläche 9 angeordnet. Die Wirkfläche 9 ist gegenüber dem zylindrischen Grundkörper 14 zur Bildung eines Einstellkeils abgeschrägt. Der Wirkfläche 9 benachbart ist ein ebener Bereich 21 der Stirnseite 20. Im Bereich des ebenen Bereichs 21 weist die Stirnseite 20 die Anfasung 22 auf. Die Anfasung 22 dient als Einführhilfe für das Einstellelement 10 in seine Führung im Werkzeugsitz 4.

Die in Fig. 5 gestrichelt eingezeichnete Normale 23 der Wirkfläche 9 schneidet den Zylindermantel des Grundkörpers 14 im Bereich der in Fig. 5 links dargestellten langen Seite 24. Die lange Seite des Grundkörpers 14 ist endseitig vom ebenen Bereich 21 der Stirnseite 20 zum Einen und von dem der Wirkfläche 9 abgewandten Freiende 12 zum Anderen begrenzt. Dementsprechend ist in Fig. 5 rechts dargestellt die kurze Seite 26 des Grundkörpers 14. Die kurze Seite 26 des Grundkörpers 14 erstreckt sich vom Freiende 12 bis hin zu dem dem ebenen Bereich 21 abgewandten Endbereich der Wirkfläche 9.

Da der durch die Beaufschlagung der Wirkfläche 9 auf die Schneidkörperrückwand 8 resultierende Kraftvektor in Richtung der Normalen 23 verläuft, ist es vorteilhaft, wenn der Grundkörper 14 mit der langen Seite 24 seines Zylindermantels möglichst flächig an der Innenwand der Führung für das Einstellelement 10 im Werkzeugsitz 4 anliegt. Um diese flächige Anlage zu begünstigen, ist es vorteilhaft, die Kontur 16 von diesem Anlagebereich möglichst fern zu halten. Aus der Darstellung der Fig. 6 ist deshalb auch besonders gut erkennbar, dass in einem besonders bevorzugten Ausführungsbeispiel die Kontur 16 in einem Winkel von 90° bezogen auf die lange Seite 24 des Zylindermantels des Grundkörpers 14 angeordnet ist. Schließlich ist beim Ausführungsbeispiel der Kontur 16 diametral gegenüberliegend ein Auslauf 27 angeordnet. Der Auslauf 27 dient als Auslauf für das Werkzeug bei der Fertigung des Einstellelements 10. Allerdings ist die Position des Auslaufs 27 nicht zwingend gegenüber der Kontur 16 vorgesehen.

Zur Fertigung der Führung für das Einstellelement 10 im Werkzeugsitz 4 wird zunächst eine Bohrung mit einem dem Teilkreisdurchmesser der Kontur 16 entsprechenden Durchmesser gesetzt. Diese Bohrung hat einen Mittelpunkt, der deckungsgleich mit dem Teilkreismittelpunkt 17 bei montiertem Einstellelement 10 ist. Sodann wird neben die Teilkreisbohrung eine größere Bohrung gesetzt mit einem Durchmesser, welcher dem Durchmesser des Grundkörpers 14 entspricht.

Der Mittelpunkt dieser größeren Bohrung ist bei montiertem Einstellelement wiederum deckungsgleich mit dem Mittelpunkt des Grundkörpers 14.

Die Wirkungsweise des Einstellelements ist folgende: Beim Wechsel des Schneidkörpers 5 wird der Schneidkörper 5 zunächst mittels der Spannschraube 6 im Zerspanungswerkzeug 1 gespannt. Die Schneidkörperrückwand 8 liegt dann plan an der Wirkfläche 9 an. Infolge der zylindrischen Geometrie des Grundkörpers 14 richtet sich das Einstellelement 10 in seiner Führung im Werkzeugsitz 4 selbsttätig aus. Durch Hinein- oder Herausschrauben der Madenschraube 13 wird die Endlage des Schneidkörpers 5 fein eingestellt und die Justierung des Werkzeugs 1 ist abgeschlossen.

## Patentansprüche

1. Einstellelement (10) für einen in einem Werkzeugsitz (4) eines Zerspanungswerkzeugs (1) gespannten Schneidkörper (5) welches zum Einsatz in einer Führung des Werkzeugsitzes (4) ausgebildet ist und das einen zylinderförmigen Grundkörper (14), aufweist
- der sich entlang einer Mittenlängsachse (11) erstreckt,
- der ein Freiende (12) aufweist,
- der eine dem Freiende gegenüberliegende Stirnseite (20) mit einer den Schneidkörper (5) im montierten Zustand beaufschlagenden Wirkfläche (9) aufweist, die gegenüber der Mittenlängsachse (11) geneigt ist und im montierten Zustand am Schneidkörper (5) anliegt,
- der eine Zylindermantelfläche (18) aufweist, die sich von der Freifläche (12) bis zur gegenüberliegenden Stirnseite (20) erstreckt,
wobei das Freiende (12) zur Beaufschlagung mit einer Madenschraube (13) ausgebildet ist, **dadurch gekennzeichnet,**
**dass** am oder im Zylindermantel (18) des Grundkörpers (14) eine von der Zylinderform abweichende Kontur (16) ausgebildet ist, die zur Anlage in der Führung des Werkzeugsitzes (4) zur Ausbildung einer Verdrehsicherung für das Einstellelement (10) ausgebildet ist, um eine Verdrehung des Einstellelements (10) um die Mittellängsachse (11) in der Führung zu begrenzen.

2. Einstellelement (10) nach Anspruch 1,
**dadurch gekennzeichnet,**
**dass** die Kontur (16) sich vom Freiende (12) bis zur Stirnseite (20) erstreckt.

3. Einstellelement (10) nach Anspruch 1 oder 2,
**dadurch gekennzeichnet,**
**dass** die Kontur (16) in den Zylindermantel eingeformt ist.

4. Einstellelement (10) nach Anspruch 3,
**gekennzeichnet durch**
eine in den Zylindermantel eingeformte Nut und einen in die Nut einlegbaren, mit seiner Stiftmantelfläche teilweise aus der Nut über den Zylindermantel hinausstehenden, vorzugsweise in der Nut unverlierbar fixierten Stift als Feder.

5. Einstellelement (10) nach Anspruch 1,
**dadurch gekennzeichnet,**
**dass** die Kontur (16) an den Zylindermantel angeformt ist.

6. Einstellelement (10) nach Anspruch 5,
**gekennzeichnet durch**
eine sich über die gesamte Länge des Einstellelements (10) erstreckende Leiste als Kontur (16).

7. Einstellelement (10) nach Anspruch 5,
**gekennzeichnet durch**
eine am Zylindermantel im Bereich des der Wirkfläche (9) abgewandten Freiendes (12) angeformte Nase als Kontur (16).

8. Einstellelement (10) nach einem der Ansprüche 5 bis 7,
**dadurch gekennzeichnet,**
**dass** die Kontur (16) nach Art eines Fortsatzes an den Zylindermantel angeformt ist und ihrerseits eine kreisförmige, einem Halbkreis entsprechende Querschnittsform aufweist.

9. Einstellelement (10) nach einem der Ansprüche 1 bis 8,
**dadurch gekennzeichnet,**
**dass** das Einstellelement (10) als Einstellkeil ausgebildet ist mit einer zur Mittellängsachse (11) des Einstellelements (10) schräg verlaufenden Wirkfläche (9) und dass die Kontur (16) außerhalb desjenigen Bereichs des Zylindermantels angeordnet ist, in welchem die Normale (23) der Wirkfläche (9) den Zylindermantel schneidet.

10. Einstellelement (10) nach Anspruch 9,
**dadurch gekennzeichnet,**
**dass** die Kontur (16) bezogen auf den Querschnitt des Grundkörpers (14) in einem Winkel von 90° versetzt zu dem Schnittbereich der Normalen (23) mit dem Zylindermantel angeordnet ist.

11. Zerspanungswerkzeug (1) mit einem mittels eines Einstellelements nach den Ansprüchen 1 bis 10 einstellbaren Schneidkörper (5), des eine Führung aufweist, in der zur Verdrehsicherung des Einstellelements (10) der zylinderförmigen Grundkörpers (14) zusammen mit der am oder im Zylindermantel des Grundkörpers (14) ausgebildeten Kontur (16) einliegt.

## Claims

1. Setting element (10) for a cutting body (5) clamped in a tool seat (4) of a cutting tool (4), which element is designed for fitting in a guide of the tool seat (4) and has a cylindrical basic body (14),
- which extends along a center longitudinal axis (11),
- which has a free end (12),
- which has an end face (20), which is remote from the free end and has an active surface (9), which acts upon the cutting body (5) in the fitted state, is slanted in relation to the center longitudinal axis (11) and lies against the cutting body (5) in the fitted state,
- which has a cylinder lateral surface (18), which extends from the free face (12) to the remote end face (20),
wherein the free end (12) is designed for being acted upon by a headless screw (13), **characterized in that** a contour (16) deviating from the cylindrical shape is formed on or in the cylinder lateral surface (18) of the basic body (14) and is designed for bearing in the guide of the tool seat (5) to form an anti-rotation locking means for the setting element (10), in order to limit rotation of the setting element (10) about the center longitudinal axis (11) in the guide.

2. Setting element (10) according to Claim 1, **characterized in that** the contour (16) extends from the free end (12) to the end face (20).

3. Setting element (10) according to Claim 1 or 2, **characterized in that** the contour (16) is integrally formed in the cylinder lateral surface.

4. Setting element (10) according to Claim 3, **characterized by** a slot formed in the cylinder lateral surface and by a pin, as key, which can be inserted into the slot, projects with the lateral pin surface thereof partly from the slot beyond the cylinder lateral surface and is preferably captively fixed in the slot.

5. Setting element (10) according to Claim 1, **characterized in that** the contour (16) is integrally formed on the cylinder lateral surface.

6. Setting element (10) according to Claim 5, **characterized by** a strip as contour (16) extending over the entire length of the setting element (10).

7. Setting element (10) according to Claim 5, **characterized by** a nose as contour (16) integrally formed on the cylinder lateral surface in the region of the free end (12) remote from the active surface (9).

8. Setting element (10) according to one of Claims 5 to 7, **characterized in that** the contour (16) is integrally formed on the cylinder lateral surface like an extension and has in turn a circular cross-sectional shape corresponding to a semicircle.

9. Setting element (10) according to one of Claims 1 to 8, **characterized in that** the setting element (10) is designed as a setting wedge, having an active surface (9) running obliquely relative to the longitudinal center axis (11) of the setting element (10), and **in that** the contour (16) is arranged outside that region of the cylinder lateral surface in which the normal (23) of the active surface (9) intersects the cylinder lateral surface.

10. Setting element (10) according to Claim 9, **characterized in that** the contour (16), with respect to the cross section of the basic body (14), is offset at an angle of 90° to the region in which the normal (23) intersects the cylinder lateral surface.

11. Cutting tool (1) comprising a cutting body (5) which can be set by means of a setting element according to Claims 1 to 10 and has a guide in which the cylindrical basic body (14) lies together with the contour (16) formed on or in the cylinder lateral surface of the basic body (14) to prevent rotation of the setting element (10).

## Revendications

1. Élément de réglage (10) pour un corps de coupe (5) serré dans un logement d'outil (4) d'un outil à enlèvement de copeaux (1), lequel est réalisé pour l'insertion dans un guide du logement d'outil (4) et comprend un corps de base (14) de forme cylindrique
- qui s'étend le long d'un axe médian longitudinal (11),
- qui comprend une extrémité libre (12),
- qui comprend un côté frontal (20) opposé à l'extrémité libre et pourvu d'une surface active (9) sollicitant le corps de coupe (5) à l'état monté, laquelle surface active est inclinée par rapport à l'axe médian longitudinal (11) et s'applique contre le corps de coupe (5) à l'état monté,
- qui comprend une surface d'enveloppe cylindrique (18) qui s'étend à partir de la surface libre (12) jusqu'au côté frontal opposé (20),
l'extrémité libre (12) étant réalisée pour la sollicitation à l'aide d'une vis sans tête (13), **caractérisé en ce que**
sur ou dans l'enveloppe cylindrique (18) du corps de base (14) est réalisé un contour (16) différant de la forme cylindrique, lequel est réalisé pour s'appuyer dans le guide du logement d'outil (4) pour la réalisation d'une fixation anti-rotation pour l'élément de réglage (10), afin de limiter une rotation de l'élément de réglage (10) autour de l'axe médian longitudinal (11) dans le guide.

2. Élément de réglage (10) selon la revendication 1,
**caractérisé en ce que**
le contour (16) s'étend à partir de l'extrémité libre (12) jusqu'au côté frontal (20).

3. Élément de réglage (10) selon la revendication 1 ou 2,
**caractérisé en ce que**
le contour (16) est formé dans l'enveloppe cylindrique.

4. Élément de réglage (10) selon la revendication 3,
**caractérisé par**
une rainure formée dans l'enveloppe cylindrique et une cheville faisant office de ressort, pouvant être insérée dans la rainure, faisant saillie, par sa surface d'enveloppe de cheville, partiellement hors de la rainure au-delà de l'enveloppe cylindrique et de préférence fixée de manière imperdable dans la rainure.

5. Élément de réglage (10) selon la revendication 1,
**caractérisé en ce que**
le contour (16) est formé sur l'enveloppe cylindrique.

6. Élément de réglage (10) selon la revendication 5,
**caractérisé par**
une nervure faisant office de contour (16), laquelle s'étend sur toute la longueur de l'élément de réglage (10).

7. Élément de réglage (10) selon la revendication 5,
**caractérisé par**
un ergot faisant office de contour (16), lequel ergot est formé sur l'enveloppe cylindrique dans la région de l'extrémité libre (12) opposée à la surface active (9).

8. Élément de réglage (10) selon l'une quelconque des revendications 5 à 7,
**caractérisé en ce que**
le contour (16) est formé à la manière d'un prolongement sur l'enveloppe cylindrique et présente pour sa part une forme circulaire en section transversale, correspondant à un demi-cercle.

9. Élément de réglage (10) selon l'une quelconque des revendications 1 à 8,
**caractérisé en ce que**
l'élément de réglage (10) est réalisé sous forme de cale de réglage pourvue d'une surface active (9) s'étendant de manière oblique par rapport à l'axe médian longitudinal (11) de l'élément de réglage (10), et **en ce que** le contour (16) est disposé à l'extérieur de la région de l'enveloppe cylindrique dans laquelle la normale (23) à la surface active (9) croise l'enveloppe cylindrique.

10. Élément de réglage (10) selon la revendication 9,
**caractérisé en ce que**
le contour (16) est disposé, par rapport à la section transversale du corps de base (14), de manière décalée suivant un angle de 90° par rapport à la région d'intersection des normales (23) avec l'enveloppe cylindrique.

11. Outil à enlèvement de copeaux (1) comprenant un corps de coupe (5) pouvant être réglé au moyen d'un élément de réglage selon les revendications 1 à 10, lequel comprend un guide dans lequel est logé le corps de base cylindrique (14) conjointement avec le contour (16) réalisé sur ou dans l'enveloppe cylindrique du corps de base (14), pour la fixation anti-rotation de l'élément de réglage (10).
